# EUROPEAN PATENT APPLICATION

(11) **EP 1 581 003 A1**
(43) Date of publication of application: **28.09.2005**
(21) Application number: 05251793.5
(22) Date of filing: 23.03.2005
(51) Int. Cl.: H04N 7/18, H04N 5/50

(54) **Monitoring system**

(30) Priority: 23.03.2004 GB 0406501
(71) Applicant: BRITISH BROADCASTING CORPORATION, Tadworth, Surrey KT20 6NP (GB)
(72) Inventor: Evans, Richard Harold, Lower Kingswood, Surrey, KT20 6RY (GB); Cotton, Andrew David Raine, Teddington, Middlesex, TW11 0LR (GB); Mitchell, Justin David, Maiderbower Crawley, RH10 7ZH (GB); Bills, Richard, Sherborne Dorset, DT9 6RN (GB)
(74) Representative: Reeve, Nicholas Edward

(57) **Abstract**

A system for monitoring a plurality of video signals in an internal video network, such as a broadcast recording environment, or security camera network, is described. The system comprises a picture monitor 2 having a screen 6 on which a mosaic video image containing the video signals from a plurality of cameras 28 or other video devices is displayed. Selection of a video signal from the mosaic image can be performed to display a full screen version of that signal.

Preferably, at the transmission stage 20 of the network, only the mosaic video image is transmitted. By not transmitting the individual video signals separately, a large saving can be made on the band width required for the transmission as well as on the cost of the encoding components at the transmitter.

## Description

This invention relates to a system for monitoring a plurality of video signals captured in an internal video network, and to a portable picture monitor, for use with the system.

In the production of a video broadcast signal, it is well known to simultaneously monitor the video signals taken by a plurality of video cameras shooting the scene from different angles and from different distances. A production crew monitoring the signals on a bank of screens can then make editing decisions about which camera footage to incorporate in the broadcast, as well as being able to follow the positions of each camera and give instructions to control the camera's subsequent movement. In addition to the actual footage of the scene, it is often also desirable to incorporate graphics or subtitles into a broadcast, as well as to supervise the operation of other resources such as autocues or subtitle generation systems.

Conventionally, in a studio environment, the production crew are housed in the gallery, or in the case of an outdoor broadcast environment, in a specialised mobile unit. However, in either case the production crew are distanced from the action of the scene, and from the camera and sound crew who are recording it and who need instruction.

We have appreciated that the conventional arrangement described above is disadvantageous as it makes communication and interaction between the production crew and the camera and sound crew difficult. Furthermore, the screens and other monitoring equipment provided in the gallery or in a specialised mobile unit are typically expensive, large, heavy and require a large amount of mains power. Each screen in the gallery or mobile unit is also typically dedicated to the feed from a particular camera. Only a limited number of video sources can therefore be shown, and if more cameras are required, modification of the existing monitoring facilities is required to be able to view the additional feeds that such cameras create.

The invention is defined in the independent claims to which reference should now be made. Advantageous features are set forth in the dependant claims.

Preferred embodiments of the invention will now be described in more detail, by way of example, and with reference to the drawings in which:
Figure 1 is an illustration of a portable picture monitor;
Figure 2 is a block diagram illustrating a transmitter and receiver stage according to an example system;
Figure 3 is a block diagram illustrating a transmitter and receiver stage according to the preferred embodiment of the invention;
Figure 4 illustrates preferred video image mosaics;
Figure 5 is a block diagram illustrating the transmitter stage of the preferred embodiment;
Figure 6 is a block diagram showing the construction of the video encoding circuits in the transmitter stage;
Figure 7 is a block diagram showing more detail of the input stage of the video encoding circuits;
Figure 8 is a block diagram illustrating a first alternative transmitter stage arrangement;
Figure 9 is a block diagram illustrating a second alternative transmitter stage arrangement.

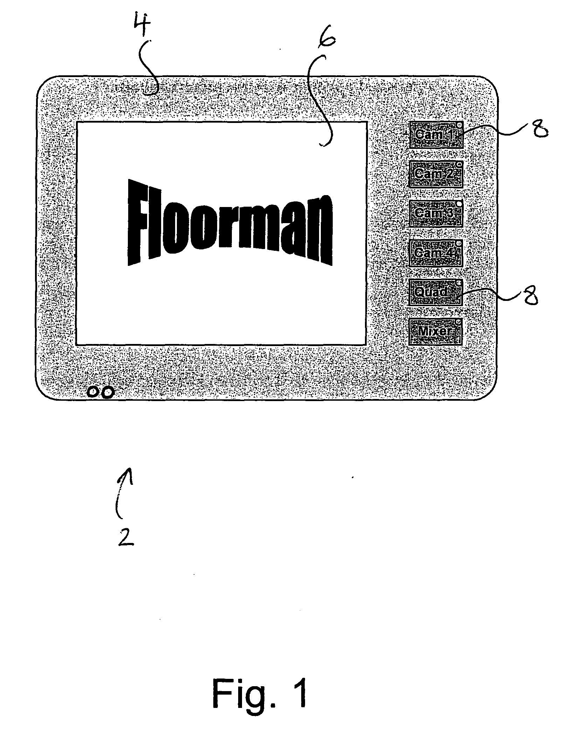

Figure 1 shows a portable picture monitor 2 developed by the applicants for use with the preferred embodiment of the invention. The monitor 2 comprises a housing 4 bearing a screen 6 and a bank of selection buttons 8. A radio frequency antenna (not shown) receives a radio signal containing the video signals from each of the cameras in the recording environment. In this context, recording environment is used to mean the recording studio, and locations where multi-camera shoots or outdoor broadcasts are taking place.

A user of the monitor 2 can select which of the camera feeds he desires to view by pressing the appropriate selection button 8. In the example shown in Figure 1, a "Quad" button is provided for simultaneously viewing the video signals received from four cameras in a poly-photo or video-mosaic arrangement. A further "Mixer" button is provided for viewing the output from the vision mixer. It will be appreciated that other buttons could also be provided corresponding to known inputs for broadcast signals, such as an autocue or teleprompter function, VT playback, or computer graphics for example.

Preferably the screen 6 is a Liquid Crystal Display (LCD) screen, as this allows the finished unit to be slim-line and lightweight. Furthermore, the picture monitor preferably comprises one or more audio output sockets for delivering an audio output to a headphone jack. The audio output would allow a channel for the production crew talkback, as well as artists' microphones and any other audio to be monitored.

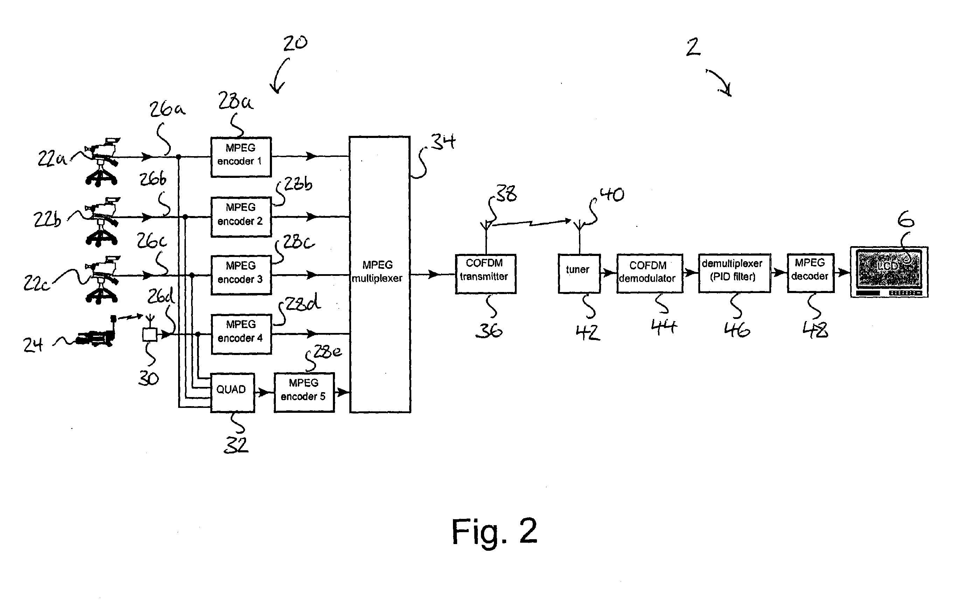

Figure 2 is a schematic view of a video picture capture and monitoring system in an example system developed by the applicants. The components indicated on the left hand side of the diagram represent a base station or transmitter stage 20 comprising video picture capture circuits as well as a transmitter. The components on the right of the diagram illustrate the construction of the picture monitor described above with reference to Figure 1. It will be appreciated that these components, that is the picture monitor 2, form a reception stage.

The transmission stage 20 comprise a number of cameras 22a, 22b, and 22c, and a radio or wireless camera 24 arranged to take video footage of a scene. Each of these views the scene from a different angle, or indeed views a different scene, and therefore produces a different video signal. The signal from cameras 22a, 22b and 22c are passed on respective cables 26a, 26b, and 26c to respective MPEG encoders 28a, 28b and 28c. The signal from the radio or wireless camera on the other hand is transmitted from the camera to the radio camera receiver 30, where it is passed by cable 26d to an MPEG encoder 28d.

Additionally, the signals from each of the four cables 26a, 26b, 26c and 26d are passed to a video mosaic generator or quad function circuit 32. The quad function circuit 32 combines the four signals received from the cameras into a single mosaic video image, in which the signal from each camera is displayed in one quarter of the area of the screen. The mosaic video signal produced by the quad circuit 32 is passed to MPEG encoder 28e.

A quad function circuit is preferred as the video mosaic generator, as the picture size of the of the video signals is reduced by substantially the same percentage in both horizontal and vertical directions. As a result, the aspect ratio of the picture is maintained and the reduced size picture can be viewed at an apparent better quality.

The MPEG encoders 28 are preferably configured to add a caption or any other suitable graphical indication to the received video signals so that the source of each video signal can be identified when it is viewed on the screen 6. The MPEG2 format is preferably employed in the various MPEG encoders.

Furthermore, the video signals recorded by the cameras could be either analogue or digital signals. In the case of analogue signals, appropriate analogue-to-digital conversion circuits are provided before the MPEG encoder and the video mosaic generator.

The MPEG encoders 28a, 28b, 28c, 28d and 28e encode the received video signals according to the Motion Picture Experts' Group Standard. The encoding results in some loss of the picture signal quality, but produces a greatly compressed signal compared to the original, which is more suited for transmission.

The signal output from each of the MPEG encoders is then passed to MPEG multiplexer 34, which combines the five different signals into a single transport stream.The MPEG transport stream is then fed to a Code Orthogonal Frequency Division Multiplexer (COFDM) encoder/transmitter 36. The encoder/transmitter 36 encodes the multiplexed signal for COFDM transmission and produces a UHF signal which is carried to an antenna 38. The antenna 38 is preferably placed in an elevated position, such as on the wall of the studio, or on the roof of a mobile unit such that the signal transmitted by the antenna 38 can be received without undue interference from the equipment and equipment operators in the area.

Furthermore, the frequency of the UHF signal is chosen to lie within spare channels in the normal UHF broadcast band to avoid interference.

The signal transmitted by the antenna 38 is available for reception by any of the picture monitors 2 in range of the signal. The right hand side of Figure 2 shows the reception stage 2 of the example system, that is the picture monitor 2, in more detail. The picture monitor 2 comprises a receiving antenna 40 and a tuner 42 for receiving the signal from the capture and transmission stage 20. The received signal from the tuner 42 is converted down to the base band before being passed to the COFDM demodulator 44. The demodulated signal from the COFDM decoder is then passed to demultiplexer 46, and subsequently to MPEG decoder 48. The fully decoded signals are then available to the picture monitor 2 for display on the screen 6. An individual signal from the five signals encoded at the transmission stage 20 can be selected for viewing on the screen 6 by operation of the buttons 8. Selection of a particular channel causes MPEG decoder 48 to decode a different part of the demultiplexed transport stream such that the required signal can be viewed.

Alternatively, the picture monitor 2 can be fitted with a touch screen display so that selection of the different signals can be made merely by touching the relevant portion of the screen corresponding to the desired signal. In this case, buttons 8 for channel selection may be omitted from the design.

It will be appreciated that input stages for additional video signals could be added to the transmission stage 20, each input stage being connected to a capture device, such as a camera 22 or 24, and an MPEG encoder 28. Additional inputs might comprise the footage from fifth and subsequent cameras, as well as the input signal from an autocue, vision mixer output, VT Playback, or computer graphics display.

The system described with reference to Figure 2, allows a member of the production crew, such as a floor manager, to freely view the signal being captured by any of the cameras 22a, 22b, 22c and 24 recording the scene. Although a cable link could be used, the radio or wireless link between the transmitter and reception stage allows the crew member to move around the recording environment without the encumbrance of a cable connection. The radio link also allows any number of picture monitors 2 to be used at the same time in the same location with each user being able to independently and separately view a different signal.

As the reliability of this wireless link is important digital modes of radio transmission, such as COFDM as described above, are preferred because they are well-suited to the high multipath environment of the studio. The reliability of the wireless link may be further improved by the use of a dual antenna and diversity dual tuner front end at the receiver, and antenna diversity at the transmitter.

In addition to COFDM encoding, at the transmission stage 20, circuitry may be provided for encryption of the signal. One reason why encryption might be desirable is to prevent the signal transmitted to the picture monitor 2 from being intercepted and leaked prior to broadcast. Corresponding decryption circuits at the reception side would then be required.

Assuming that an encryption/decryption layer is present, it is preferable if an encryption enable/disable facility is provided so that the use of encryption can be made as and when desired.

The example illustrated above provides a useful working system. However, having put this into practice in a real broadcast environment, it was found to contain a number of disadvantages. Firstly, MPEG encoders are relatively expensive. The transmitter stage shown in Figure 2 requires one encoder per video channel, and as a result, the transmitter stage is costly, especially if a large number of video channels (9 for example) are desired. Secondly, the multi-format split-screen picture produced by the quad circuit 32 contains the same information, although at a lower resolution, as that being carried on the separate dedicated video channels for each of the respective cameras. This is a poor use of the finite bit rate available for the transmission link.

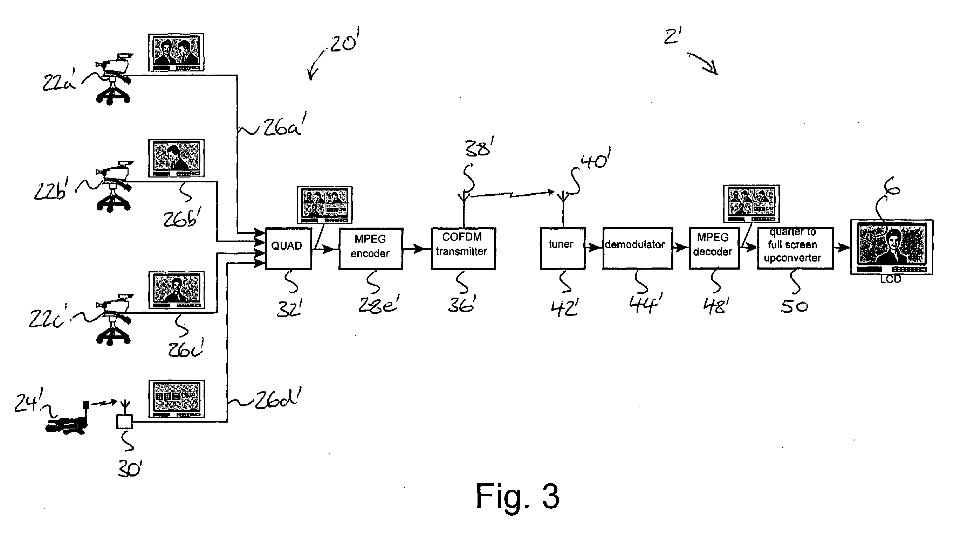

An improved transmitter stage and picture monitor according to the preferred embodiment of the invention will now be described in more detail with reference to Figure 3. This embodiment was developed appreciating the problems identified above, and therefore operates in a different way. For ease of reference, components that feature in both the example system and the preferred embodiment have been given the same reference numeral where appropriate.

The capture and transmission stage 20', according to the preferred embodiment, similarly comprises cameras 22a', 22b' and 22c', as well as radio camera 24'. Each of these views the scene from a different angle, or indeed views a different scene, and therefore produces a different video signal. The signals received from each of the cameras 22a', 22b' and 22c' are passed by respective cables 26a', 26b' and 26c' to the video mosaic generator or quad function circuit 32'. Similarly, the signal captured by radio or wireless camera 24' is received by wireless camera receiver 30' and passed by cable 26d' to the quad function circuit 32'. Quad function circuit 32' combines the four input video signals from each of the respective cameras into a mosaic video picture, in which each respective video signal occupies one quarter of the video frame. This signal is then passed to MPEG encoder 28e' where the mosaic video picture is encoded in the MPEG format. The MPEG encoded signal is then passed to COFDM transmitter 36' where it is converted into a UHF signal for transmission by antenna 38'.

It will be appreciated that the capture and transmission stage 20' shown in Figure 3 differs from that shown in Figure 2 by the omission of the MPEG encoders 28a, 28b, 28c, 28d dedicated to each of the feeds from the cameras. The video signal from each camera is therefore only passed to the video mosaic generator or quad function circuit 32'. As a result, only one signal for transmission is produced by the transmitter stage 20', namely the mosaic video signal produced by the quad function circuit. As a result of this multiplexer 34 is not required and is also omitted.

Similarly, the picture monitor 2' for use with the preferred embodiment of the invention comprises a receiving antenna 40' and tuner 42' for receiving the signal transmitted by antenna 38'. The received signal is then converted to the base band, where it undergoes COFDM demodulation in COFDM demodulator 44'. The demodulated signal from the COFDM demodulator is then decoded by MPEG decoder 48' for viewing on the screen 6 of the picture monitor 2. The picture monitor 2 also comprises a quarter-to-full-screen up-converter 50, connected after the MPEG decoder 48, before the connection to the screen 6. If the channel to be viewed on the screen 6 is that of the mosaic video picture, the up-converter is not engaged and the received signal is displayed unmodified. However, if one of the channels corresponding to the video signals received from an individual camera is selected, then the up-converter 50 is engaged to increase the size of the relevant quarter of the video mosaic signal containing the selected video signal so that it occupies the full screen. The mosaic video picture itself is not then shown, and only the magnified signal corresponding to the selection of the user is displayed.

The preferred embodiment of the invention avoids duplication of any signals, by incorporating the four separate signals into the mosaic video image and transmitting this only. Furthermore, as there is only one resulting video signal to encode and transmit, only one MPEG encoder at the transmission stage 20' is required. These factors mean that the band width of the transmission channel for the picture monitor is used more effectively, and allows the transmission stage 20' to be produced and installed at a significantly reduced cost. Furthermore, the embodiment shown in Figure 3 allows the operator of the portable video monitor 2 to switch between channels more quickly than with the system shown in Figure 2. This is because each of the separate video channels is derived from the single mosaic video picture signal which is being continuously decoded. Selection of different video channels therefore merely involves the magnification of different parts of the already decoded signal, and can therefore be performed almost instantaneously. In the example shown in Figure 2, each time a different video channel is selected, a new signal has to be picked up from the demultiplexer 46. The MPEG decoder 48 therefore has to process and decode a new signal. As will be understood by those skilled in the art, the MPEG coding process relies on manipulating a Group Of Pictures (GOP) made up of a number of picture frames. When the video channel is changed therefore a new GOP has to be processed. As a result, a delay approximately equal to the duration of the GOP is introduced. In Figure 3 however there is no requirement to pick-up a new GOP and there is therefore no such interruption. The video signal selection can be performed almost instantaneously.

As mentioned above, a quad function circuit 32 is preferred as it maintains the aspect ratio of the original video input during the conversion process from the full sized picture signal to the quarter size picture signal included in the mosaic video picture. In view of this, it will be appreciated therefore that the video mosaic generator preferably produces a mosaic video image having a full screen size that is identical to that of the plurality of video signals received at the input, that is to say that the resolution of the mosaic video image, measured in number of pixels for the image width and height, is the same for both the mosaic video image and each individual video signal before down conversion takes place.

It will be appreciated that the down-conversion process in the capture and transmission stage 20' shown in Figure 3 reduces the resolution of each quarter screen picture to one half horizontally and vertically. When one of the quarter screen pictures is up-converted to full-screen size, the resolution of the resulting picture will still have half of the horizontal and half of the vertical resolution of a standard broadcast picture.

It will also be appreciated that the small LCD screens that are suitable for a handheld device such as that described, and that are commonly available, have a typical resolution of 240 lines by 480 pixels. This is much less than the resolution of a television picture typically having 575 lines by 720 pixels.

Therefore, if the process of down-conversion followed by up-conversion is carried out as described, it will advantageously result in an image which has a similar resolution to the LCD screen upon which it is being displayed.

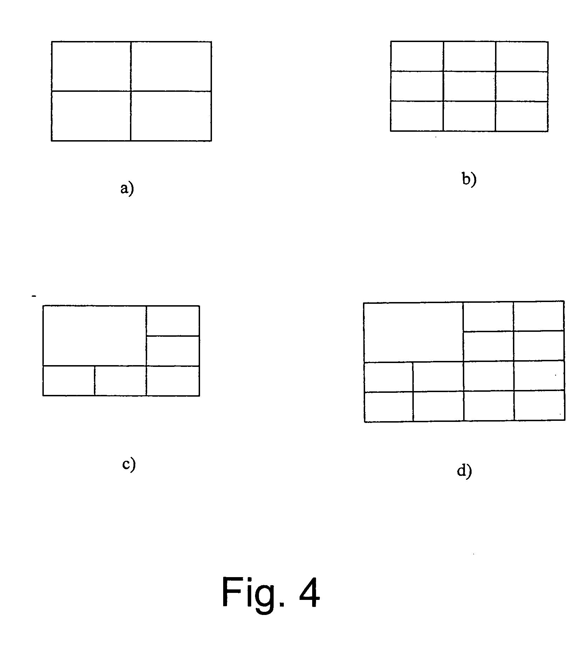

If more than four video inputs are to be used with the preferred system, a simple quad circuit function 32 of the type described above will not be sufficient to display all of the signals. Figure 4 therefore shows a number of preferred split screen formats in the case of 4 (a), 9 (b), 6 (c) and 13 (d), video inputs. While the picture could be divided up in any number of arbitrary ways, the display formats shown in Figure 4 are preferred because they all preserve the wide screen aspect ratio of the original picture, fill the entire screen, and still allow all of the video sources to be carried in a single COFDM multiplex. Clearly, in the case where there are more than four inputs, additional channel-selection buttons will need to be provided on the picture monitor 2 or alternatively, a more flexible graphical user interface system is provided. A touch screen system as described above would give the most flexibility.

The 6 and 13 video input format allow for one of the video inputs to take up more screen space than the other. The larger display area can then be used in a number of ways. Firstly, it may display the selected channel, while the unselected channels are displayed around the side. Secondly, it may also be used as a dedicated display for a particular signal with higher resolution than those which are allocated to the smaller screen areas.

To produce the 13 video input display, the screen must be divided into quarter screen width regions. With such an arrangement, and those in which the screen is divided into smaller regions, the shrinking-combining process significantly reduces the resolution of the individual subpictures. The up-converted picture of the selected signal seen on the screen 6 of the picture monitor 2 may then look too soft because of the loss in resolution. Nevertheless, it will be appreciated that in certain implementations, the loss of resolution may be outweighed by the benefit of being able to view many different inputs simultaneously.

In situations where there are slightly fewer video input signals than would entirely fill one of the split screen formats shown in Figure 4, such as 7 or 8 video sources carried in the 9 region format for example, the surplus regions of the screen are preferably left blank. The blank part of the picture is easily coded and allows more of the finite bit rate of the transmission link to be allocated to the useful picture material.

It will be appreciated that the picture monitor 2 has equivalent functionality to a hand held DVB-T (Digital Video Broadcast-Terrestrial) receiver, though the system is arranged so that the component signals fed directly from the camera feeds are displayed on the monitor rather than the finalised broadcast programme transmitted from a television transmitter. Furthermore, the system is arranged to monitor other video sources, such as an autocue, VT playback, vision mixer output, or computer graphics signal. The system is therefore limited to an internal video network, that is a local, private network, in which video signals are captured and transmitted internally, but which are not transmitted directly to the public. Such an internal video network may be a television programme production network, or a security camera network for example.

The preferred embodiment further differs in operation to a normal DVB-T transmitter and receiver system in that only the mosaic video picture is transmitted, and the picture monitor or the receiver, has up-conversion circuits in order to magnify a selected part of the mosaic picture.

Having described the overall operation of the preferred system, a preferred implementation of the system architecture will now be described in more detail. The components shown in the schematic drawings of the transmission stage 20 can be divided into two logical groups, namely picture manipulation components and components for transmission of the signal. The ideal location in the recording environment for the components in each of these groups is not be identical. For example, the many video inputs will, most likely, be available in a technical area, such as near or in the production gallery, away from the area in which the recording equipment is located. On the other hand, the transmission antenna, must, by design, be in the same vicinity as the picture monitor 2, which is most usefully available in the proximity of the recording equipment. Providing the functionality of all of the components in a single location, a so-called "one-box" solution, creates a number of problems. If the 'box' is placed in the technical area, the input signals will be available, but the output COFDM signal may have to be transported long distances. As radio frequency tie-lines for the COFDM signal, are not necessarily readily available in the recording environment, this could be problematic. Conversely, having the 'box' in an area close to the area in which the picture monitor is likely to be used, means that vision tie-lines would likely be required to pass the video input signals from the technical area to the recording environment in which the transmission stage is located. Further lines would be required for control and monitoring signals.

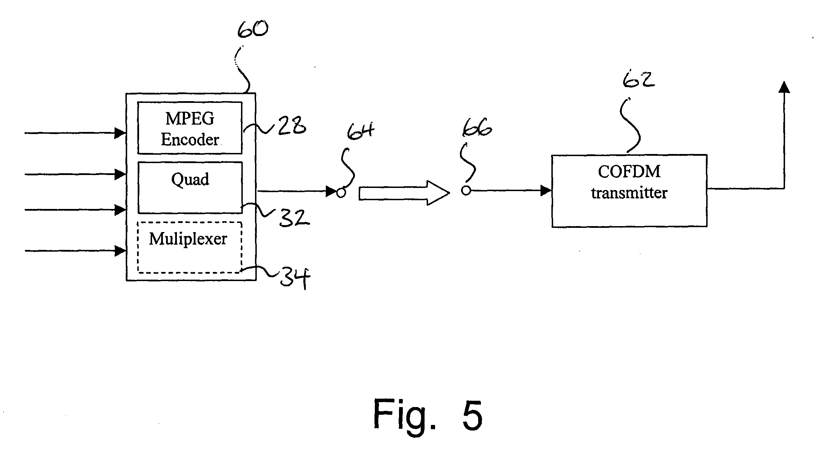

With these considerations in mind, we have appreciated that it is advantageous to split the components relating to picture manipulation and the final transmission of the signal into separate housings. With reference to Figure 5, therefore, it can be seen that the preferred transmission stage 20 comprises a picture component housing 60, having one or more MPEG encoders 28, a quad function circuit 32, and a multiplexer 34 if necessary. This is disposed at one location which is preferably a technical area. A radio frequency component housing 62, which includes the COFDM transmitter, is located at a second location at which the picture monitor is intended to be used. The picture component housing 60 has an Asynchronous Serial Interface (ASI) output 64, and the RF component housing 62 comprises ASI input 66. As is known in the art, the ASI system is more suitable for transporting data than a typical RF link.

Instead of an ASI link as described above, the picture component housing 60 in the technical area could process the video input to give a modulated Intermediate Frequency (IF) signal at the output, providing the RF component housing 62 is arranged to accept such a signal.

Also, in the recording environment where the picture monitors 2 are to be used, the system could be further divided so that the COFDM transmitter is located on the floor or on a bench, while the transmission antenna is mounted to a wall or ceiling.

Separation of the picture manipulation and RF stages in the manner described provides a number of advantages in addition to those outlined above. By separating the base band and RF stages, potential interference problems between the two stages are avoided. Furthermore, transmission of COFDM signals requires high linearity amplifiers which produce a large amount of heat. By separating the COFDM stage from the picture manipulation stage, appropriate cooling means can be provided for each stage so that the heat that is produced is easier to manage.

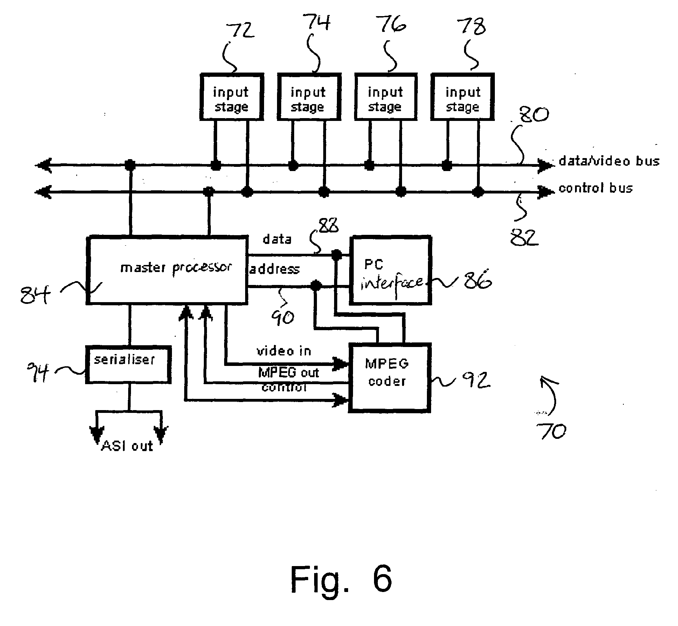

With reference to Figure 6, the picture manipulation components in the picture component housing 60 will now be described in more detail. The picture components comprise a picture manipulation circuit 70, having four input stages 72, 74, 76 and 78 arranged to receive respective inputs from cameras such as 22a, 22b, 22c and 24 as shown in Figure 3. The input stages are connected in parallel with each other to a data/video bus 80 and to a control bus 82. The data/video bus 80 and control bus 82 in turn connect the input stages to a master processor 84. Preferably, this is a Xilinx chip, XC25150, or other gate array device.

The picture manipulation circuit 70 also comprises a control PC unit 86, connected to the master processor 84 by a data bus 88 and an address bus 90. The control PC unit 86 allows interfacing and control of the master processor 84 and therefore of the picture manipulation circuit 70. An MPEG encoder unit 92 is connected to the data bus 88 and to the address bus 90, and is arranged to receive a video input signal from the master processor 84 and return an MPEG encoded output signal to the processor. Two way control signals pass between MPEG encoder 92 and the processor 84 in order to regulate the flow of the video input information and MPEG output information.

The master processor 84 is also provided with a memory (not shown) for the temporary storage of video signals which are to be passed to and received from the MPEG encoder 92.

A multiplexer or serialiser 94 is connected to the processor 84 to convert the data for output into a form suitable for transmission in a single transmission stream from the ASI output. It will be appreciated that the multiplexer is optional depending on whether the transmission scheme of example system or the preferred embodiment, or a variant thereof is implemented. This will be described in more detail later.

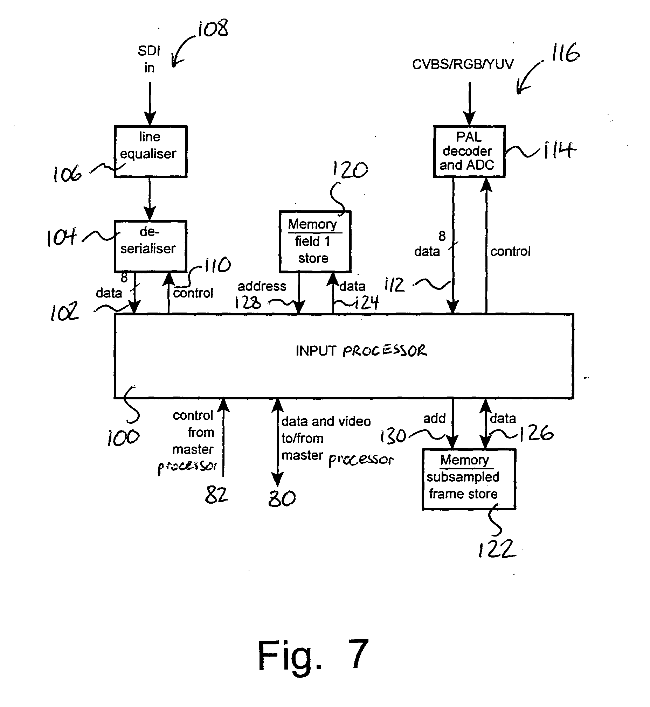

The input stages 72, 74, 76 and 78 are preferably able to accept a variety of input video signals, including SDI (Serial Digital Interface) signals, as well as CVBS, RGB and YUV format signals. This allows them to be installed in various recording environments and used with various recording equipment without problems of compatibility. The input stages will now be described in more detail with reference to Figure 7.

Each input stage is preferably identical, and comprises a respective input stage processor 100 for receiving and processing an input video signal from a camera, or other video input source such as autocue, VT playback stream, computer graphics and so on. The processor receives SDI input via an SDI data bus 102 connected to a deserializer 104 and a line equalizer 106 forming an SDI input 108 as is known in the art. Control of the input line 108 is achieved by SDI control bus 110.

The input stage processor 100 also receives data via the data bus 112. This is connected to a PAL decoder and analog-to-digital converter 114, which form the input line 116 for CVBS, RGB and YUV format signals. Control of this input line is performed by the control bus 118.

The input stage processor 100 is responsible for down-converting a received input video signal for inclusion in the mosaic video picture. The down-conversion preferably reduces the picture size dimensions to one quarter, or two thirds of its original size, depending on the split screen format used. The input stage processor 100 is connected to two large memory blocks 120 and 122 which are used in this process. The first memory block 120 stores a first field of the incoming signal for later sub-sampling, and the second memory block 122 stores the reduced resolution output video picture being generated, until the processing is completed.

Data is passed to and from the input stage processor 100 and the first and second memory blocks 120 and 122 by respective data buses 124 and 126, while the memory address look-up necessary for the picture down conversion is controlled via address busses 128 and 130.

Once completed, the down-converted picture from the second memory block 122 is transmitted to the master processor 84 via data/video bus 80 under the control of control bus 82.

The signals received from each of the input stages are received by the master processor 84 and stored in memory corresponding to the respective region of a split screen mosaic. The master processor 84 additionally adds identification captions to each picture signal, so that a user of the portable picture monitor 2 can distinguish one video input from another. Alternatively, this step could be performed by the input stage processor. Once the video picture mosaic has been completed by receipt of the respective input video signals from each of the input stages, it is passed to MPEG encoder 92 where it is encoded in the MPEG format.

The MPEG encoded signal is then passed back to the processor 84 where encryption coding can take place if desired. The encoders and possibly encrypted signal is then passed to serialiser 94 where multiplexing can take place according to the implementation.

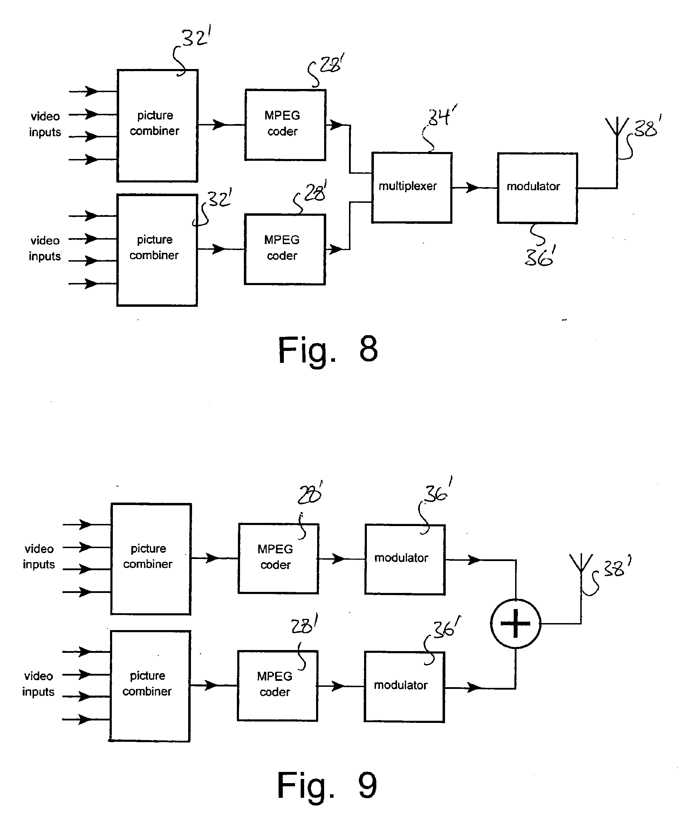

A multiplexer may be implemented in the preferred embodiment for example if it is desired to transmit more than four video inputs in the 4 picture format video mosaic. This may be desirable for example because this format preserves some of the size and therefore the resolution of the transmitted image when it is up-converted in comparison to the 6 or greater picture formats. In this case, more than one video mosaic generator arranged to produce a one-quarter screen mosaic video image is provided, and the output of each of these multiplexed together for transmission. This scheme, illustrated schematically in Figure 8, would still retain the efficiency of the preferred embodiment as each video signal would still be transmitted only once. Of course, the plurality of video mosaic generators could be arranged to output mosaic video images of other sizes and formats.

In the case of a large number of video inputs and where it is desired to maintain a good picture quality more than one modulator may be desired to transmit the video information on a number of frequencies or transmission schemes. Figure 9 illustrates schematically such an arrangement. In Figure 9, each modulator 36' comprises a number of modulator stages which output each mosaic video signal for transmission at a different respective frequency. These signals are then combined at adder 39 before transmission by the antenna 38'.

Although Figure 6 shows only four inputs, as has been described earlier, use with a greater number is also contemplated. Preferably the inputs 72, 74, 76 and 78 are provided on a single board, and if more inputs are required, then additional boards of four inputs are simply added. Thus, a modular structure of input stages is envisaged enabling the system to easily scale, while providing a cost reduction derived from the manufacture of a large number of identical components.

Furthermore, in terms of manufacturing, it has been found advantageous to produce only modular boards containing all of the master processor 84, and associated components, and the four inputs stages 72, 74, 76 and 78. These modular boards can then be connected to other identical boards to form the picture manipulation circuits. Despite each board having a master processor, only one of the master processors is activated, limiting the other boards to input functions only. Input signals received at a board can then be passed along the data/video bus 80 to the board having the active master processor 84 for processing and output.

Although this results in redundancy of the unused master processors on the boards added merely for additional input stages, the reduction in production costs by manufacturing one design of a multipurpose board is significant. Boards manufactured in this way are also readily used in the variation of the preferred embodiment shown in Figures 8 and 9, where more than one MPEG encoder or multiplexer may be required. In this scheme, the mosaic video picture produced by each activated master processor could be transmitted along the databus to a dedicated master processor linked to the serialiser 94 and the ASI output, or alternatively, the mosaic video picture from each of the master processors could be processed by the separate serialisers and output separately (as indicated in Figure 9).

Although the preferred system has been described in the context of a recording studio or Outdoor Broadcast environment, it will be appreciated that it has other applications in other local and private networks. One such example is for a security system in which the footage from video cameras is transmitted for display on a monitor, located at a security desk or in a guard room. With the preferred system, a security guard with a portable monitor could view the footage of each of the individual camera while at the security desk or guard room as well as when patrolling the area under his care. In this application of the preferred system, the provision of the up-converter or magnification circuits 50 are preferred for the picture monitor, as in the preferred embodiment, as with simple modification they can be employed to magnify smaller parts of a video picture to fill the screen. This would allow a security guard to 'zoom-in' on movement or areas of interest within the picture received from a particular camera.

Additionally, it will be appreciated that while the ability to magnify areas of the received mosaic image is preferable, in alternative embodiments the ability to magnify may be omitted. The receiver would then be configured to display the mosaic image only, ande not magnified portions of this image. This embodiment may be more suitable to the security implemenation described above for example, in which it is desirable to simultaneously monitor a large number of inputs, rather than focus on an individual input.

It will be appreciated that although the monitoring receiver has been described in terms of circuitry dedicated to the purpose of RF tuning, demodulation and MPEG video decoding, alternatively some of the functionality of the monitoring receiver could be implemented in software for operation on a computer such as a 'tablet PC', or a 'PDA' (Personal Digital Assistant). The video could then be displayed on the computer's screen.

In this case, the tuner and demodulator are preferably implemented in a dedicated hardware module which is connected to the computer. The decoding of the MPEG signal, descrambling, and the quarter-to-full size upconversion process are then carried out using software running on the computer. The computer may also supply power to the hardware module, and if the computer has a touch screen, this could be used to select the video channel to be enlarged from the video information displayed on the computer screen.

The dedicated hardware module for use in this embodiment should conform to the PCMCIA (PC card) standard, described at http://www.pcmcia.org/
pccardstandard.htm, for example. The hardware receiver module, in the form of a PCMCIA card, may then be plugged into a slot in the side of the computer, the slot providing signal and power connections and mechanical support. An external antenna can be connected to the exposed edge of the card.

An example of a tablet PC suitable for this application is the 'ViewSonic Tablet PC V1100'.

Other possible methods for connecting the hardware module to a portable computer include 'USB2.0' and 'FireWire', although these provide no mechanical support. For non-portable computers, the hardware module may be connected using the PCI bus or the ISA bus standards.

An additional advantage of using a tablet PC is that a TV programme maker may using it at the same time for other applications such as script editing, viewing shooting schedules and so on.

The systems described above for use in a recording environment could also be extended to allow simple vision mixing to be carried out remotely via the radio link. Also, if the picture monitor is provided with a two way radio, then a user could communicate with other users of the system, such as members of the production crew or other security guards.

## Claims

1. A system for monitoring video signals captured in an internal video network, the system having a transmitter and a receiver stage:
the transmitter stage comprising:
a) an input stage for receiving a plurality of video signals;
b) video mosaic generation means for generating a mosaic video image comprising the plurality of video signals received at the input stage, wherein each signal in the mosaic video image has a picture size smaller than that of a full screen picture; and
c) an antenna arranged to transmit the mosaic video signal only; and
the receiver stage comprising:
a) a receiver for receiving the transmitted mosaic video signal;
b) received video enlarging means for magnifying a portion of the mosaic video image corresponding to a selected video signal; and
c) a screen for displaying either the mosaic video image or the magnified portion of the mosaic video image corresponding to a selected video signal;
wherein only the mosaic video signal is transmitted between the transmitter stage and the receiver stage.

2. A system according to claim 1, wherein the input stage comprises a down-converter arranged to convert a video image with a full screen picture size to a smaller picture size.

3. A system according to claim 1, wherein the video mosaic generation means comprises a down-converter arranged to convert a video image with a full screen picture size to a smaller picture size.

4. A system according to claim 2 or 3, wherein the down-converter is arranged to substantially maintain the aspect ratio of the video image when it is reduced to a smaller picture size.

5. A system according to claim 4, wherein the mosaic video image comprises a mosaic of four regions each taking up one-quarter of the full screen area.

6. A system according to claim 4, wherein the mosaic video image comprises a mosaic of nine regions each taking up one-ninth of the full screen area.

7. A system according to claim 4, wherein the down-converter is arranged to reduce the picture size of the video image to one-half or two-thirds of its original size.

8. A system according to claim 7, wherein the mosaic video image comprises a mosaic of both picture sizes.

9. A system according to claim 8, wherein a region with a larger picture size is used to display a video signal at higher resolution than the region with the smaller picture size.

10. A system according to any preceding claim, wherein the video mosaic generating means is arranged to generate a mosaic video image having a full screen size identical to that of the plurality of video signals.

11. A system according to any preceding claim, wherein the video mosaic generating means is arranged to generate a mosaic video image having the same resolution as that of the plurality of video signals.

12. A system according to any preceding claim, wherein the transmitter stage comprises an encryption circuit for encrypting the mosaic video signal for transmission, and the receiver stage comprises a corresponding decryption circuit.

13. A system according to claim 12, comprising an enable / disable facility for the encryption and decryption circuits.

14. A system according to any preceding claim, wherein the internal video network is a television production network, and the input stage is arranged to receive video signals comprising one or more of: video signals from television cameras, auto-cue footage, pre-recorded playback footage, the output from a vision mixing station, and computer graphics.

15. A system according to claim 14, wherein the receiver has an output, and a vision mixing function for combining the video inputs received into a mixed output video signal.

16. A system according to any preceding claim, wherein the input stage is adapted for direct connection to a plurality of video cameras.

17. A system according to any preceding claim wherein the transmitter comprises a COFDM encoder arranged to transmit on spare channels within the UHF band.

18. A receiver stage for use in the system of claim 1, arranged to receive the transmitted mosaic video signal.

19. A receiver stage according to claim 18, wherein the receiver, the received video enlarging means and the screen are housed in a portable, hand-held unit.

20. A receiver stage according to claims 18 or 19, wherein the screen is a touch screen, such that portions of the mosaic video image can be selected by touching the portion of the video image in which they are displayed.

21. A transmitter stage arranged for use in the system of claim 1.

22. A transmitter stage according to claim 21, wherein the video mosaic generating means and the antenna are housed in separate housings.

23. A system for transmitting multiple video broadcast signals, having a transmitter and a receiver stage:
the transmitter stage comprising:
a) an input stage for receiving a plurality of video signals;
b) down-converting means for down-converting a video signal to a smaller picture size substantially preserving the aspect ratio of the original picture;
c) a video mosaic generator for generating a mosaic video image comprising the plurality of video signals down-converted by the down-converting means, the mosaic video image generated having a full screen picture size; and
d) an antenna arranged to transmit the mosaic video signal only; and
the receiver stage comprising:
a) a receiver for receiving the transmitted mosaic video signal;
b) received video enlarging means for magnifying a portion of the mosaic video image corresponding to a selected video signal; and
c) a screen for displaying either the mosaic video image or the magnified portion of the mosaic video image corresponding to a selected video signal;
wherein only the mosaic video signal is transmitted between the transmitter stage and the receiver stage.

24. A transmitter for transmitting multiple video broadcast signals, the transmitter comprising:
a) an input stage for receiving a plurality of video signals;
b) down-converting means for down-converting a video signal to a smaller picture size substantially preserving the aspect ratio of the original picture;
c) a video mosaic generator for generating a mosaic video image comprising the plurality of video signals down-converted by the down-converting means, the mosaic video image generated having a full screen picture size; and
d) an antenna arranged to transmit the mosaic video signal only.

25. A receiver, for use in a transmission scheme in which a mosaic video image, comprising a plurality of individual video signals, is transmitted, the receiver comprising:
a) a receiver for receiving the transmitted mosaic video signal;
b) received video enlarging means for magnifying a portion of the mosaic video image corresponding to a selected video signal; and
c) a screen for displaying either the mosaic video image or the magnified portion of the mosaic video image corresponding to a selected video signal.

26. A method of monitoring video signals captured in an internal video network, the method comprising at a transmission side:
a) receiving a plurality of video signals;
b) generating a mosaic video image comprising the plurality of received video signals, wherein each signal in the mosaic video image has a picture size smaller than that of a full screen picture; and
c) transmitting only the mosaic video signal;
the method comprising at a reception side:
a) receiving the transmitted mosaic video signal;
b) magnifying a portion of the mosaic video image corresponding to a selected video signal; and
c) displaying either the mosaic video image or the magnified portion of the mosaic video image corresponding to a selected video signal;
wherein only the mosaic video signal is transmitted from the transmission side to the reception side.

27. A method for transmitting multiple video broadcast signals, the method comprising:
a) receiving a plurality of video signals;
b) down-converting the plurality of video signals to a smaller picture size substantially preserving the aspect ratio of the original pictures;
c) generating a mosaic video image comprising the plurality of video signals down-converted by the down-converting means, the mosaic video image generated having a full screen picture size; and
d) transmitting only the mosaic video signal;
e) receiving the transmitted mosaic video signal;
f) magnifying a portion of the mosaic video image corresponding to a selected video signal; and
g) displaying either the mosaic video image or the magnified portion of the mosaic video image corresponding to a selected video signal;
wherein only the mosaic video signal is transmitted and received.

28. A method according to claim 26 or 27 comprising down-converting a video image with a full screen picture size to a smaller picture size.

29. A method according to claim 28, comprising substantially maintaining the aspect ratio of the video image when it is reduced to a smaller picture size on the down-converting step.

30. A method according to claim 29, wherein the mosaic video image comprises a mosaic of four regions each taking up one-quarter of the full screen area.

31. A method according to claim 29, wherein the mosaic video image comprises a mosaic of nine regions each taking up one-ninth of the full screen area.

32. A method according to claim 29, comprising reducing the picture size of the video image to one-half or two-thirds of its original size in the down-converting step.

33. A method according to claim 32, wherein the mosaic video image comprises a mosaic of both picture sizes.

34. A method according to claim 33, wherein a region with a larger picture size is used to display a video signal at higher resolution than the region with the smaller picture size.

35. A method according to any preceding claim, wherein the mosaic video image has a full screen size identical to that of the plurality of video signals.

36. A method according to any preceding claim, wherein the video mosaic image has the same resolution as that of the plurality of video signals.

37. A method according to any of claims 26 to 36, comprising encrypting the mosaic video image for transmission, and decrypting it on reception.
